# EUROPÄISCHE PATENTSCHRIFT

(11) **EP 3 147 533 B1**
(45) Veröffentlichungstag und Bekanntmachung des Hinweises auf die Patenterteilung: **14.11.2018**
(21) Anmeldenummer: 16187174.4
(22) Anmeldetag: 05.09.2016
(51) Int. Cl.: F16F 1/37, A63G 9/00, D07B 5/00, D07B 1/12

(54) **SCHOCKABSORBERKÖRPER UND SPIELGERÄT MIT EINER SCHOCKABSORBERKÖRPERANORDNUNG**
SHOCK ABSORBER BODY AND RECREATIONAL DEVICE WITH A SHOCK ABSORBER BODY ASSEMBLY
CORPS ABSORBEUR DE CHOCS ET APPAREIL DE JEU AVEC DISPOSITIF DE CORPS ABSORBEUR DE CHOCS

(30) Priorität: 24.09.2015 CH 13912015
(43) Veröffentlichungstag der Anmeldung: 29.03.2017
(73) Patentinhaber: Seilfabrik Ullmann AG, 9015 St. Gallen (CH)
(72) Erfinder: Ullmann, Martin, 9410 Heiden (CH)
(74) Vertreter: Gachnang, Hans Rudolf

(56) Entgegenhaltungen:
- DE-A1-102010 023 927
- DE-U1-202009 005 328
- DE-U1-202013 006 599
- GB-A- 1 592 841
- US-A- 4 789 045
- US-A1- 2004 135 132
- US-A1- 2012 324 858
- US-A1- 2014 345 978
- US-B1- 7 134 267

## Beschreibung

Gegenstand der Erfindung ist ein Schockabsorberkörper und ein Spielgerät mit einer Schockabsorberkörperanordnung gemäss Oberbegriff der Patentansprüche 1 und 9.

Schockabsorber sind aus vielen Anwendungen bekannt. Sie dienen dazu, entweder einen mit einem Schockabsorber versehenen Gegenstand vor harten Schlägen, die von aussen einwirken, zu schützen oder sie schützen einen Gegenstand oder eine Person, die auf einen mit einem Schockabsorber versehenen Gegenstand auftrifft.
So sind beispielsweise Spielgeräte für Kinder wenn immer möglich gepolstert, das heisst sie sind von einem Schockabsorber umgeben oder mit einem solchen überzogen, damit sich die auf den Spielgeräten spielenden Kinder nicht verletzen, wenn sie an die Spielgeräte anschlagen oder umgekehrt, wenn die Spielgeräte wie Schaukeln oder Nestschaukeln auf im Schwing- oder Schaukelbereich sich aufhaltende Kinder auftreffen. So sind beispielsweise auf vielen Kinderspielplätzen solche Nestschaukeln, auch Storchennester genannt, aufgebaut, welche einen steifen Ring, z.B. einen Ring aus einem Rohr aus Stahl oder Kunststoff umfassen, wobei der innere Querschnitt des Rings durch ein Netz aus Seilen ähnlich einem Tennisracket bespannt ist und es ermöglicht, dass ein oder mehrere Kinder sich auf diesem Netz aufhalten können. Solche Netzschaukeln sind meist an vier Seilen aufgehängt. Die vier Seile können sich an einem zentralen Aufhängeort, sei es an einer Decke oder einem Balken, zusammengefasst sein oder die Seile verlaufen schräg nach aussen und sind an zwei oder vier voneinander beabstandeten Stellen oben festgemacht. Die vier Seile stellen sicher, dass die Nestschaukel nicht kippen kann, wenn sie einseitig von einem Kind bestiegen wird oder wenn ein Kind oder eine erwachsene Person auf den Ring sitzt oder steht. Insbesondere Nestschaukeln, die an einem einzigen Punkt aufgehängt sind, können sich auf einer geraden oder einen kreisförmigen Bahn bewegen oder pendeln. Es besteht folglich die Gefahr, wenn mit einer solchen Nestschaukel kräftig geschaukelt wird oder andere Bewegungen ausgeführt werden, ein neben der Nestschaukel stehendes Kind oder auch eine erwachsene Person von dieser hart angestossen werden. Solche Stösse gilt es zu dämpfen. Als Schockabsorberkörper werden die die Nestschaukel bildenden verhältnismässig harten Kunststoff- oder Metallrohre bisher mit einem im Querschnitt kreisförmigen Körper umwickelt, dessen Kern aus Schaumstoff besteht und dessen Mantel geflochten ist. Als Kern werden Schaumstoffrohre oder zu einem Rohr zusammengefügte Schaumstoff-Halbschalen, wie sie zur Isolation von Warmwasserleitungen bekannt sind, verbunden. Nachteilig an diesem Aufbau des Schockabsorberkörpers hat sich erwiesen, dass dieser, wenn er über längere Zeit punktuell belastet wird, eine Delle bildet, die irreversibel ist und folglich einerseits das Spielgerät nicht mehr perfekt aussieht und andererseits Stellen aufweist, bei denen ein Schlag nicht mehr optimal absorbiert werden kann. Diese Nachteile entstehen durch die hohe örtliche Beanspruchung, d.h. die hohen Zugkräfte an der Aussenseite des rohrförmigen Kunststoffkörpers durch das Umwickeln von der im Verhältnis zum Durchmesser des Kunststoffkörpers nicht wesentlich grösseren Durchmessers des den Ring bildenden Rohres. Die dadurch auf die äussere Oberfläche des Körpers wirkenden Spannungen übersteigen oft die Elastizitätsgrenze des Materials, sodass durch die bei Gebrauch später örtlich wirkenden Druckkräfte das Material weiter überdehnt wird und folglich bricht. Mit Schockabsorberkörpern in Rohrform umwickelte Rohre sind auch an anderen Geräten als Nestschaukeln auf dem Spielplatz bekannt und weisen dieselben Nachteile auf. Aus der DE 20 2009 005 328 U1 ist ein Spielgerät bekannt, bei welchem als Polsterung das Rohr des Spielgeräts durch Seile mit einer Drahteinlage umwickelt werden. Durch diese Drahteinlage werden die Seile sehr hart und folglich die Elastizität des elastischen Mantels sehr stark eingeschränkt. Weiter ist aus der US 2012/0324858 ein Stahlseil bekannt, welches von weiteren Stahlseilen ummantelt ist, um das zentrale zugaufnehmende Stahlseil zu schützen. Die Ummantelung des Spielgeräts mit einem solchen Seil ist nicht stossdämpfend und folglich schützt es nicht vor Verletzungen.
Eine Aufgabe der vorliegenden Erfindung besteht nun darin, einen Schockabsorberkörper und ein Spielgerät mit einem Schockabsorberkörper zu schaffen, der bzw. das seine schockabsorbierenden Eigenschaften nicht verliert, wenn über längere Zeit punktuell oder auf grösseren Flächen eine übermässige Last einwirkt, das heisst der Schockabsorberkörper am Spielgerät zusammengepresst wird.

Gelöst wird diese Aufgabe durch einen Schockabsorberkörper gemäss den Merkmalen des Patentanspruchs 1 und ein Spielgerät gemäss Patentanspruch 9. Vorteilhafte Ausgestaltungen des Schockabsorberkörpers und des Spielgeräts sind in den abhängigen Ansprüchen umschrieben.

Es gelingt durch einen Schockabsorberkörper mit einem Kern, der aus einer Mehrzahl von geschlagenen Schaumstoffschnüren aufgebaut ist, eine Dauerelastizität aufrechtzuerhalten, auch wenn dessen Kern über längere Zeit punktuell oder grossflächig stark belastet wird. Durch eine Seele im Zentrum der geschlagenen Kunststoffschnüre aus einem dehnungsarmen Schlauch oder einem Seil werden Zugkräfte auf die Schaumstoffschnüre unterbunden.
Beim Umwickeln des Rohrs einer Nestschaukel liegen die geschlagenen Schnüre durch einen Mantel aus einem Geflecht oder Gewebe gehalten lose aneinander. Die jeweils radial zur Achse des Rohrs innen liegenden Bereiche der Kunststoffschnüre, die gestaucht werden, können nach aussen gleiten und so übermässige Zugkräfte auf die peripher liegenden Bereiche im Wesentlichen kompensieren.

Eine gleichmässige Elastizität quer zu deren Längsrichtung über den gesamten Umfang und die Länge wird dadurch erreicht.
Mit der Ummantelung des Kerns aus einem Geflecht von textilen Fäden oder auch einem Schlauch, z.B. einem Schrumpfschlauch, kann die Härte des Kerns eingestellt werden, das heisst ein satt anliegender Mantel, der die Kunststoffschnüre radial zusammenpresst, erhöht die Härte und ein locker den Kern umschlingender geflochtener Mantel bewahrt die Weichheit des Kerns. Der Mantel eines zum Beispiel vierschäftig geschlagenen Kerns aus Kunststoffschnüren verhindert nicht, dass die Kunststoffschnüre beim Umwickeln des aus einem Rohr gefertigten Nestrings bildenden Gestells oder Rings zum Ausgleich von Zugkräften relativ zueinander gleiten können und folglich gleichmässig beansprucht werden. Die aussen zu liegen kommenden Bereiche der Kunststoffschnüre werden an der Peripherie der jeweiligen Wicklung nicht überdehnt und damit nicht mechanisch belastet, sondern die Kunststoffschnüre können sich in deren Längsrichtung derart gegeneinander verschieben, so dass die Spannung auf der Wicklungsinnenseite im Wesentlichen der Spannung auf der Aussenseite entspricht. Der ganze Schockabsorberkörper ist folglich in sich ohne schädliche Spannungen oder Kompressionen. Dies im Gegensatz zu den herkömmlichen Kernen, die aus einer rohrförmigen Schale bzw. aus zwei zusammengefügten Schalenhälften bestehen, bei denen dann beim Wickeln um das Rohr des Nestringes die äussere Schale extrem gestreckt und die innen liegende extrem gestaucht wird, was dort zu den bleibenden Schäden bereits ohne Belastung und noch mehr bei Belastung führt.

Anhand eines illustrierten Ausführungsbeispiels wird die Erfindung näher erläutert. Es zeigen:
- Figur 1: einen Abschnitt eines gestreckt liegenden Schockabsorberkörpers aus vier geschlagenen, schraubenförmig miteinander verschlungenen Schaumstoffschnüren,
- Figur 2: einen Querschnitt durch den Schockabsorber, längs Linie II-II in Fig. 1,
- Figur 3: eine Ansicht des Schockabsorbers aufgewickelt auf ein Rohr,
- Figur 4: eine Ansicht des Schockabsorbers und des Rohrs aus Richtung des Pfeils P in Fig. 3 und
- Figur 5: eine Nestschaukel in einer Ansicht schräg von oben.

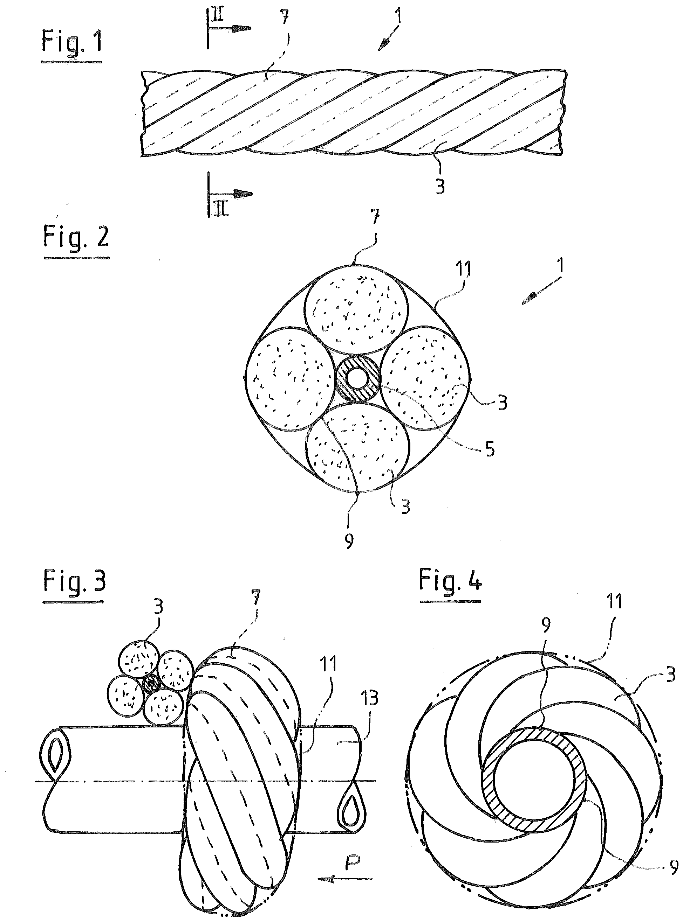

In Figur 1 ist schematisch und ausschnittsweise ein Schockabsorberkörper 1 in gestreckter Lage von der Seite betrachtet dargestellt. Dieser umfasst eine Mehrzahl von Schaumstoffschnüren 3, welche wie bei der Herstellung eines geschlagenen Seils schraubenlinienförmig verlaufend dann den Schockabsorberkörper 1 bilden. Unter einer Schaumstoffschnur 3 versteht man einen Schaumstoffkörper mit zum Beispiel rundem oder mehreckigem Querschnitt, der endlos durch Extrusion hergestellt ist. Schaumstoffschnüre 3 werden üblicherweise im Bauwesen zum Dichten von Fugen zwischen zwei Bauteilen, zum Beispiel einer Wandöffnung und einem Fenster oder zwei aneinander stossenden Wänden eingefügt. Sie werden folglich auch als Füllschnur bezeichnet. Die hier zur Verwendung gelangenden Schaumstoffschnüre 3 sind im Querschnitt rund, sie können aber ja nach Verwendungszweck auch einen
Vieleckquerschnitt aufweisen und sie bestehen aus einem geschlossenporigen Kunststoff wie Polyethylen, Polypropylen, Polyamid, Polyurethan oder Latex, der die Aufnahme von Wasser verhindert. Im Weiteren werden vorteilhafterweise Schaumstoffschnüre 3 eingesetzt, deren Oberfläche glatt ausgebildet ist und folglich eine geringe Reibung zwischen den schraubenlinienförmig miteinander verdrehten Schaumstoffschnüren 3 aufweist. Die geschlagenen, das heisst schraubenlinienförmig gedrehten Schaumstoffschnüre 3, vorzugsweise vier oder fünf an der Zahl, bilden dann den vierschäftigen Schocksabsorberkörper 1. Da Schaumstoffschnüre 3 im Wesentlichen keine bzw. nur äusserst geringe Zugfestigkeit aufweisen, dürfen diese während der Herstellung des Schockabsorberkörpers 1 nicht auf Zug belastet werden. Es wird u.a. deshalb im Zentrum der vier Schaumstoffschnüre 3 ein Zugkräfte aufnehmendes Element, zum Beispiel ein Seil oder ein Schlauch 5, wie in Figur 2 ersichtlich, als Seele eingelegt. Dieser Schlauch 5 nimmt also bereits bei der Herstellung des Schockabsorberkörpers 1 die notwendigen Zugkräfte der Herstellungsmaschine auf, um die Schaumstoffschnüre 3 in die gewünschte miteinander verdrehte und gegenseitig sich berührende Lage zu führen. Mit anderen Worten, das Seil oder der Schlauch 5 übernimmt bei der Herstellung des Schockabsorberkörpers 1 allein die Zugkräfte, so dass die Schaumstoffschnüre 3 in Längsrichtung im Wesentlichen nicht belastet werden.
Die Schaumstoffschnüre 3 kommen dadurch in gegenseitigem Kontakt, und zwar entlang schraubenlinienförmig verlaufender Kontaktlinien 9 bzw. streifenförmigen Flächen wegen der hohen Elastizität des Schaumstoffs. Die peripher aussen liegenden Scheitellinien 7 der Schaumstoffschnüre 3 verlaufen ebenfalls schraubenlinienförmig. Die innen liegenden Scheitellinien 17, die das Seil oder den Schlauch 5 kontaktieren, verlaufen entlang einer schraubenlinienförmigen Linie oder eines entsprechenden Bandes. Die Verwendung eines Schlauchs statt eines Seils 5 hat den Vorteil, dass der Schockabsorberkörper 1 bis in dessen Zentrum weichelastisch ist.

Der derart aus geschlagenen Schaumstoffschnüren 3 aufgebaute Schockabsorberkörper 1 wird nachfolgend oder bereits während des Schlagens oder Verdrehens der Schaumstoffschnüre 3 in einem Mantel 11 eingebettet. Dadurch werden die zuvor nicht gegenseitig verklebten oder anderweitig verbundenen, sondern nur aneinanderliegenden Schaumstoffschnüre 3 sicher in der geschlagenen Position gehalten. Ohne den Mantel 11 sind die Schaumstoffschnüre 3 nicht gegenseitig fixiert.
Je nach Anforderung an den Schockabsorberkörper 1 bezüglich Härte, umfasst der Mantel 11 die Schaumstoffschnüre 3 lose, so wie sie geschlagen worden sind, also ohne Kompression, oder der Mantel 11 weist einen Querschnitt auf, der wesentlich kleiner ist als der Querschnitt der zum Beispiel vier Schaumstoffschnüre 3, so dass diese bei der Ummantelung radial etwas komprimiert werden. Durch das Zusammenpressen bei der Ummantelung werden die zuvor linienförmig verlaufenden Kontaktbereiche zu Kontaktstreifen 9. Als Mantel 11 kann ein Kunststoffschlauch oder, besonders vorteilhaft, ein Geflecht aus Kunststofffäden, z.B. ein solches, wie es bei geflochtenen Seilen eingesetzt wird, aufgebracht werden. Vorzugsweise werden für das Geflecht Kunststofffäden verwendet, die eine glatte abriebfeste Oberfläche aufweisen und zudem aus einem UV-beständigen Material hergestellt sind und dadurch der Mantel 11 und die Schaumstoffschnüre 3 vor Schädigungen durch das Sonnenlicht und mechanischer Beanspruchung geschützt werden.

Dieser aus mehreren Schaumstoffschnüren 3 und einem zugfesten Seil oder Schlauch 5 und mit einem Mantel 11 zusammengehaltene Schockabsorberkörper 1 bildet das Ausgangsmaterial für die Ummantelung eines rohrförmigen Rings oder eines Geländers, wie es zum Beispiel für Spielgeräte auf Kinderspielplätzen im Einsatz ist.

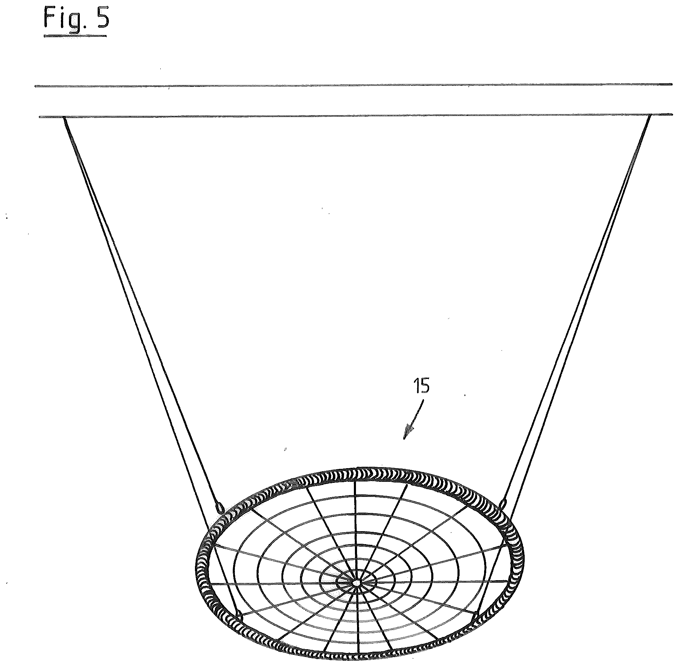

Der Schockabsorberkörper 1 wird für den Aufbau einer schockabsorbierenden Oberfläche für ein Spielgerät oder dergleichen schraubenlinienförmig um das das Gestell oder den Ring bildende Rohr 13 gewickelt. Dabei muss beachtet werden, dass sich die nebeneinander liegenden Windungen des Schockabsorberkörpers 1 nicht nur berühren, sondern in axialer Richtung des umwickelten Rohrs 13 satt aneinander gepresst werden. Dies insbesondere deshalb, weil bei einem ringförmigen Gestell bzw. Rohr 13, zum Beispiel für eine Nestschaukel 15, gemäss Figur 5 der Umfang an der aussen liegenden Peripherie des Rohres 13 grösser ist als der Umfang an der innen liegenden Peripherie. Diese Längenunterschiede bewirken bei nicht satt nebeneinander liegenden Windungen, dass auf der äusseren Peripherie die Schaumstoffschnüre 3 bzw. der Schockabsorberkörper 1 sich nicht mehr einander berührend liegen.

Durch den eingangs beschriebenen Aufbau des Schockabsorberkörpers 1 aus einer Mehrzahl von nebeneinander liegender geschlagener, jedoch nicht miteinander verbundener Schaumstoffschnüre 3 gelingt es, die beim Umwickeln des Rohres 13, dessen Durchmesser meist etwa gleich ist wie der Durchmesser des Schockabsorberkörpers 1, die beim Wickeln auf die einzelnen Schaumstoffschnüre 3 wirkenden Zugkräfte im Bereich der aussen liegenden Abschnitte der Schaumstoffschnüre 3 und die entsprechenden Stauchkräfte auf die dem Rohr 13 zugewendeten Abschnitte der Schaumstoffschnüre 3 auszugleichen. Dies erfolgt dadurch, dass die auf die Abschnitte der Schaumstoffschnüre 3, die aussen liegen, wirkenden Zugkräfte auf die am Rohr 13 anliegenden Abschnitte der Schaumstoffschnüre 3 zu übertragen, dass diese nachgezogen werden und dadurch die Schaumstoffschnüre 3 im Wesentlichen über den gesamten Umfang ausgeglichen auf Zug und Stauchung belastet werden. Die nun nicht durch Zugkräfte gestresste Oberflächen der Schaumstoffschnüre 3, die im Bereich des grössten Durchmessers, d.h. an der Peripherie des Spielgeräts zu liegen kommen, bewirkt, dass keine Druckstellen entstehen können, da die Weichheit und dadurch die Rückstellkräfte innerhalb der Schaumstoffschnüre 3 aufrecht erhalten werden und keine Dellen entstehen können, wenn punktuell oder auf kleineren Flächen hohe Druckkräfte auf den Schockabsorberkörper 1 einwirken.

Die am gesamten um ein Rohr 13 gewickelten Schockabsorberkörper 1 nun einwirkenden Zug- und Stauchkräfte werden folglich durch die gegenseitige Verschiebbarkeit der geschlagenen Schaumstoffschnüre 3 von den innen liegenden Abschnitten zu den aussen liegenden Abschnitten während des Wickelvorgangs laufend ausgeglichen. Damit sind einerseits nicht nur die schädlichen Zugkräfte auf die nicht zugresistenten Schaumstoffschnüre 3 aufgehoben, sondern die gesamte Konstruktion ist in sich spannungsfrei und folglich werden nicht nur die unerwünschten Dellen vermieden, sondern der gesamte Aufbau ist spannungsfrei und folglich keinen schädlichen Kräften ausgesetzt.

## Patentansprüche

1. Schockabsorberkörper (1) für die Ummantelung von im Querschnitt rohrförmigen Trag- und Absperrvorrichtungen auf Kinderspielplätzen, umfassend einen Kern aus Schaumstoff sowie einen den Schockabsorberkörper (1) umschliessenden Mantel (11),
**dadurch gekennzeichnet, dass**
der Kern eine Mehrzahl von schraubenförmig geschlagen nebeneinander angeordneten Schaumstoffschnüre (3) umfasst, die vom Mantel (11) zusammengehalten sind.

2. Schockabsorberkörper nach Anspruch 1, **dadurch gekennzeichnet, dass** die Schaumstoffschnüre (3) einen runden oder vieleckigen Querschnitt aufweisen.

3. Schockabsorberkörper nach einem der Ansprüche 1 oder 2, **dadurch gekennzeichnet, dass** die Oberfläche der Schaumstoffschnüre (3) glatt und der die Schaumstoffschnüre (3) bildende Schaum geschlossenporig ausgebildet ist.

4. Schockabsorberkörper nach einem der Ansprüche 1 bis 3, **dadurch gekennzeichnet, dass** im Zentrum des Kerns eine Zugkräfte aufnehmende Seele in Gestalt eines Seils oder eines Schlauchs (5) eingelegt ist.

5. Schockabsorberkörper nach einem der Ansprüche 1 bis 4, **dadurch gekennzeichnet, dass** der Mantel (11) ein Geflecht, einen Schlauch oder einen Schrumpfschlauch umfasst.

6. Schockabsorberkörper nach einem der Ansprüche 1 bis 5, **dadurch gekennzeichnet, dass** der Querschnitt des Kerns vom Mantel (11) radial zusammengepresst und dadurch dessen Querschnitt im Verhältnis zu einem nicht ummantelten Kern verkleinert ist.

7. Schockabsorberkörer nach einem der Ansprüche 1 oder 6, **dadurch gekennzeichnet, dass** das Herstellungsmaterial für die Schaumstoffschnüre (3) einen Schaum aus Polyethylen, Polypropylen, Polyamid, Polyurethan oder Latex umfasst.

8. Schockabsorberkörper nach einem der Ansprüche 1 bis 7, **dadurch gekennzeichnet, dass** die Oberfläche der Schaumstoffschnüre (3) ein in axialer Richtung verlaufendes Gleiten der aneinanderstossenden benachbarten Schaumstoffschnüre (3) bei ungleicher Zugbelastung der Schaumstoffschnüre (3) zulässt.

9. Spielgerät (13) mit einem kreisringförmigen oder geradlinig verlaufenden Gestell aus einem Metall- oder Kunststoffrohr (13) mit einem um das Metall- oder Kunststoffrohr (13) gewickelten Schockabsorberkörper (1) gemäss einem oder mehreren Ansprüche 1 bis 8.

10. Spielgerät nach Anspruch 9, **dadurch gekennzeichnet, dass** die Schaumstoffschnüre (3) im Mantel (11) beim Umwickeln des Rohrs (13) zum Ausgleich von Spannungen und Zugkräften gegeneinander verschiebbar ausgebildet und im gewickelten Zustand im Wesentlichen frei von Spannungen sind.

## Claims

1. A shock absorber body (1) for sheathing supporting and barrier devices of tubular cross-section on children's playgrounds, comprising a core made of foam and a sheath (11) enclosing the shock absorber body(1),
**characterised in that**
the core comprises a plurality of foam cords (3) twisted helically and arranged next to each other, which are held together by the sheath (11).

2. The shock absorber body according to Claim 1, **characterised in that** the foam cords (3) have a round or polygonal cross-section.

3. The shock absorber body according to any one of Claims 1 or 2, **characterised in that** the surface of the foam cords (3) is smooth and the foam forming the foam cords (3) is a closed-cell foam.

4. The shock absorber body according to any one of Claims 1 to 3, **characterised in that** an interior core in the form of a rope or a hose (5) is inserted in the centre of the core.

5. The shock absorber body according to any one of Claims 1 to 4, **characterised in that** the sheath (11) comprises a braid, a hose or a heat-shrinkable sleeve.

6. The shock absorber body according to any one of Claims 1 to 5, **characterised in that** the cross-section of the core is radially compressed by the sheath (11) and as a result its cross-section is made smaller compared to an unsheathed core.

7. The shock absorber body according to any one of Claims 1 or 6, **characterised in that** the production material for the foam cords (3) comprises a foam made of polyethylene, polypropylene, polyamide polyurethane or latex.

8. The shock absorber body according to any one of Claims 1 to 7, **characterised in that** the surface of the foam cords (3) allows the abutting adjacent foam cords (3) to slide in an axial direction in the event of nonuniform tensile loading of the foam cords (3).

9. Play equipment (13) comprising a circular ring-shaped or linear frame made of a metal or plastic tube (13) with a shock absorber body (1) according to one or several of Claims 1 to 8 wound around the metal or plastic tube (13).

10. Play equipment according to Claim 9, **characterised in that** the foam cords (3) in the sheath (11) are configured to be slidable against each other while being wound around the tube (13), to level out stresses and tensile forces, and are essentially free from stresses in the wound state.

## Revendications

1. Corps amortisseur (1) pour l'enveloppe de dispositifs de support et de fermeture de section tubulaire sur des aires de jeux pour enfants, comprenant un noyau en mousse ainsi qu'une gaine (11) entourant le corps amortisseur (1),
**caractérisé en ce que**
le noyau comprend une multiplicité de cordes en mousse (3) commises de façon toronnée disposées les unes à côté des autres, lesquelles sont maintenues ensemble par la gaine (11).

2. Corps amortisseur selon la revendication 1, **caractérisé en ce que** les cordes en mousse (3) présentent une section transversale ronde ou polygonale.

3. Corps amortisseur selon l'une des revendications 1 ou 2, **caractérisé en ce que** la surface des cordes en mousse (3) est lisse et **en ce que** la mousse formant les cordes en mousse (3) est formée à cellules fermées.

4. Corps amortisseur selon l'une des revendications 1 à 3, **caractérisé en ce qu'**une âme absorbant les forces de traction est disposée au centre du noyau, sous la forme d'une corde ou d'un tuyau (5).

5. Corps amortisseur selon l'une des revendications 1 à 4, **caractérisé en ce que** la gaine (11) comprend une tresse, un tuyau ou une gaine thermorétractable.

6. Corps amortisseur selon l'une des revendications 1 à 5, **caractérisé en ce que** la section du noyau est comprimée radialement par la gaine (11) et **en ce que**, de ce fait, sa section est réduite par rapport à un noyau non gainé.

7. Corps amortisseur selon l'une des revendications 1 ou 6, **caractérisé en ce que** le matériau de fabrication pour les cordes en mousse (3) comprend une mousse en : polyéthylène, polypropylène, polyamide, polyuréthane ou latex.

8. Corps amortisseur selon l'une des revendications 1 à 7, **caractérisé en ce que** la surface des cordes en mousse (3) permet un glissement, s'étendant en direction axiale, des cordes en mousse (3) voisines se touchant, lors d'une charge de traction inégale des cordes en mousse (3).

9. Appareil de jeu (13) avec un châssis en forme d'anneau ou s'étendant en ligne droite formé d'un tube en métal ou en plastique (13) avec un corps amortisseur (1) enroulé autour du tube en métal ou en plastique (13), selon une ou plusieurs des revendications 1 à 8.

10. Appareil de jeu selon la revendication 9, **caractérisé en ce que** les cordes en mousse (3) sont formées de façon déplaçable les unes par rapport aux autres dans la gaine (11) lors de l'enroulement du tube (13) pour la compensation des tensions et des charges de traction et sont essentiellement dépourvues de tension en état enroulé.
